# EUROPEAN PATENT SPECIFICATION

(11) **EP 1 175 156 B1**
(45) Date of publication and mention of the grant of the patent: **27.07.2005**
(21) Application number: 00922690.3
(22) Date of filing: 03.05.2000
(51) Int. Cl.: A23L 1/10, A23L 1/105

(54) **CEREAL PRODUCT**
GETREIDEPRODUKT
PRODUIT A BASE DE CEREALES

(30) Priority: 03.05.1999 FI 991008
(43) Date of publication of application: 30.01.2002
(73) Proprietor: Bioferme OY, 20760 Piispanristi (FI)
(72) Inventor: LÖV, Jeff, FI-07855 Tesjoki (FI); SCHARLIN, Merja, FIN-20760 Piispanristi (FI); SALMINEN, Seppo, FIN-20100 Turku (FI)
(74) Representative: Karvinen, Leena Maria
(86) International application number: PCT/FI2000/000388
(87) International publication number: WO 2000/065930

(56) References cited:
- EP-A1- 0 663 153
- EP-A2- 0 583 231
- DE-A1- 2 304 305
- US-A- 4 908 223

## Description

The present invention pertains to the field of food technology and relates to a method for treating cereals, especially oat, so that a cereal product of a new type is obtained, which can be used widely as a raw material in food industry.

Recently the interest in oat and other dietary fiber products has strongly increased, since the Food and Drug Administration of the United States has given a permission to use in advertising a health statement, according to which oat bran and rolled oats decrease the risk of heart diseases, if the product contains at least 13 g of oat bran or 20 g of rolled oats per portion. This means about 0.75 g of β-glucane per portion. According to FDA, experiments have shown that already about three grams of β-glucane per day lower the level of serum cholesterol by about five per cent.

US-patent 4,996,063 describes a method for producing a water-soluble dietary fiber composition by treating oatmeal or oat bran with α-amylase enzyme to thin out oat starch. On the other hand, WO-publication 95/07628 describes a method for preparing a homogeneous and stable cereal suspension, in which method oatmeal is treated with α- and β-amylase enzymes.

In both of the above mentioned methods α- and/or β-amylase enzymes are used to thin out starch, which readily gives an odd flavour to the oat suspension. In addition, the known starch-degrading enzymes demand a temperature over 100°C to be inactivated. This kind of heat treatment can further cause colour and taste defects in the end product. The mentioned methods neither exploit the whole starting raw material, but a part of physiologically and/or technologically effective particles of the grain are discarded.

Certain patent publications disclose methods for degrading cereal starch by homogenization. For instance, DE patent application No. 2 304 305 describes a method for preparing a fodder additive rich in starch. In said method, pulp prepared of vegetable starch flour and aqueous liquid is shortly heated (1 to 2 minutes) at 60 to 85°C, such that the pulp swells, and the mass so obtained is homogenized, until the microscopically detectable starch granules have degraded, and the liquid obtained is dried into powder.

US-patent No. 4,908,223 describes a method for preparing a frozen dessert, in which method flour containing oat or rice bran is mixed with water, and the mixture is heated into the cooking temperature (100 - 110°C) and kept there for 1 to 30 minutes. Then the mass is homogenized in e.g. Waring blendor homogenator, and cooled.

EP-patent No. 583 231 describes a continuous starch separating method, in the starting step of which cereal flour is mixed with not over 30°C water. However, the bran is preferably separated from the flour before mixing into water, since the goal is to obtain a starch yield as high as possible.

EP patent application No. 663 153 describes a method for preparing a low-calory (low-fat) food product, in which cereal flour and additional starch are slurried into water and the starch is gelatinized, cooled and homogenized, whereafter the mixture is inoculated with suitable lactic acid or similar bacteria, and fermented.

Each of these known methods have substantial differences in respect of the method according to the present invention. Either the starting material is different, containing in most cases substantially more of starch than is advantageous in the present invention or, on the other hand, the treating conditions, especially the temperatures, differ substantially from those used in the method of the present invention.

When using oat as the starting material for a cereal product, it should be noted that it is often advantageous to leave a part of the oat starch undegraded in oat-containing end products, since starch also acts as a natural thickening agent. In enzymatic treatment (cf. US 4,996,063 and WO 95/07628) it is difficult to control a partial starch thinning and degradation, which is considerably easier in the mechanical process of the present invention.

Consequently, we have now found out that it is possible to prepare from cereals, especially from oat, a cereal product containing plenty of soluble fiber, as an emulsion using a simple process, in which cereal bran or whole-meal cereal flakes are suspended into water as such or as milled, in an appropriate concentration, and the suspension obtained is wet-ground and homogenized mechanically to a cream-like emulsion. The emulsion is after-ripened by heating for some time under 100°C, and cooled.

After that, if desired, the emulsion can further be fermented by appropriate strains of lactic acid, bifido- or propionic acid bacteria, or a mixture of such bacteria. Instead of fermentation, pH can be lowered with a suitable acid accepted for food use. Finally, before packing, the emulsion is still pasteurized or UHT-treated to guarantee long shelf-life.

Consequently, the invention relates to a cereal emulsion prepared from cereals, especially from oat, by modifying starch, and a method for preparing the same. The cereal emulsion according to the invention has smooth mouthfeel, and also a multiplied β-glucane concentration, depending on the desired dry-matter content.

Consequently, the cereal emulsion according to the invention can very well be used as a healthy, dietary fiber-rich and low-fat basis of for instance various fat, cheese and vegetarian spreads, or youghurts, ice creams and desserts, or as a dietary fiber-rich additional ingredient of drink mixtures. It can also be used as an additional ingredient in salad dressings, or as an oil substitute in mayonnaises. The emulsion according to the invention can also be used as an economical and easy-to-use dietary fiber or β-glucane additive both in dairy, meat processing and processed-food industry.

In the process according to the invention any (Finnish) cereal, i.e. oat, barley, rye or wheat can be used as a raw material. Oat is preferred.

When oat is used as raw material, the process is carried out as follows:

Oat bran or whole-meal rolled oats (or these as milled) are suspended into water up to dry-matter content of 1 to 35%, preferably simultaneously stirring, and the suspension obtained is heat treated at 50 to 95°C for 10 to 60 minutes. The heat-treated suspension is wet-ground and homogenized mechanically at a temperature of 50 to 95°C and at a pressure of 80 to 250 bar, preferably 150 to 170 bar, whereby a cream-like emulsion is obtained. Most preferably, two separate homogenizing steps are carried out after the wet-grinding. The first homogenization is carried out at 89 to 95°C and at a pressure of 150 to 170 bar, and after that the second homogenization at 70 to 75°C and at the pressure of 80 to 140 bar.

The emulsion obtained is after-ripened by heating to under 100°C (pasteurization), and cooled. If desired, the cooled emulsion is fermented with suitable lactic acid, bifido- or propionic acid bacteria or a mixture of these bacteria. Instead of fermentation, lowering of pH can be carried out by adding citric, malic, acetic or lactic acid. Finally, the fermented emulsion is further pasteurized or UHT-treated to guarantee long shelf-life. If desired, the emulsion obtained can additionally be dried into powder. Drying can be carried out by known methods, as e.g. by roller drying.

The strong mechanical treatment, i.e. wet-grinding and homogenization, as well as the correct selection of the temperature, pressure and time of treatment enable partial hydrolysation of the starch. In that case it is not necessary to add enzymes to the product for hydrolysing the starch. The cream-like emulsion obtained as the end-product contains plenty of β-glucane, and it also probably has cereal proteins in a particulate dispersion.

The after-ripening of the emulsion is carried out by cooking, pasteurizing or by UHT-treatment (Ultra High Temperature), depending on the starting material and the subsequent target of use, and dry-matter content of the emulsion.

It is preferable to ferment the cereal emulsion by lactic acid, bifido- or propionic acid bacteria or a mixture of such bacteria, suitable for souring of cereals, because by fermentation the shelf life of the emulsion is substantially increased, and its aroma and colour are improved. In addition to these positive technological and organoleptic properties many of the selected strains of the lactic acid, bifido- or propionic acid bacteria have also scientifically studied, health promoting, probiotic properties. Lactic acid bacteria suitable for fermenting a cereal emulsion include e.g. *Lactobacillus acidophilus, L. rhamnosus, L. casei* or *L. paracasei*, and *L. salivarius. Bifidobacterium lactis* 12, *B. longum* and *B. bifidum* are suitable bifidobacteria, and *Propionibacterium freudenreichii* is a suitable propionic acid bacterium.

In order to guarantee long shelf-life it is preferable to pasteurize or treat the emulsion by UHT after the fermentation as well.

The following Examples illustrate the preferred embodiments of the method according to the invention, for the preparation of a fiber-rich cereal emulsion.

### Example 1

20 kg of oat bran were mixed with 80 litres of water, the temperature of which was 93 to 94°C. The suspension obtained was wet-ground mechanically by a grinding pump (Silversson Inline Mixer), and homogenized. The homogenization was carried out by running the mixture through the nozzle of a homogenizer at the pressure of 150 to 170 bar. The emulsion was after-ripened by pasteurizing it in a tubular heat exchanger for 20 min at 96 to 97°C, and it was cooled and packed for subsequent use.

### Example 2

15 kg of flour of rolled oats were mixed with 85 litres of water, the temperature of which was 90 to 91°C. The suspension was stirred for 30 min and subsequently wet-ground mechanically by a grinding pump, and homogenized in two phases. The first homogenization was carried out at 89°C and at the pressure of 150 bar, and the second homogenization at 70°C and at the pressure of 100 to 120 bar. The after-ripening of the emulsion was carried out by cooking for 30 min at 96 to 97°C. Thereafter the concoction was cooled to 40°C, and inoculated with the following starter mixture: *Lactobacillus acidophilus, Lactobacillus rhamnosus, Bifidobacterium lactis* and *Propionibacterium freudenreichii.* The fermenting time at 40°C was 24 hours. After this the mixture was pasteurized and cooled.

## Claims

1. A method for preparing a fiber-rich cereal emulsion,
**characterized in that**
- cereal bran or whole-meal cereal flakes are treated with hot water at a temperature of 50 to 95°C for 10 to 60 minutes,
- the suspension obtained is wet-ground and homogenized to a cream-like emulsion, and
- the emulsion obtained is after-ripened and cooled.

2. The method according to claim 1, **characterized in that** the cereal bran or the whole-meal cereal flakes are milled into flour prior to the treatment with hot water.

3. The method according to claim 1 or 2, **characterized in that** the cereal bran or whole-meal cereal flakes are suspended into water up to dry-matter content of 1 to 35% prior to the treatment with hot water.

4. The method according to any one of the claims 1 to 3, **characterized in that** the treatment with hot water is carried out at a temperature of 89 to 95°C.

5. The method according to any one of the claims 1 to 4, **characterized in that** the homogenization is carried out by running the suspension through a pressure nozzle at a pressure of 80 to 250 bar, at a temperature of 50 to 95°C.

6. The method according to any one of the claims 1 to 4, **characterized in that** the homogenization is carried out in two phases, such that the first homogenization is carried out at 89 to 95°C and at a pressure of 150 to 170 bar, and thereafter the second homogenization at 70 to 75°C and at a pressure of 80 to 140 bar.

7. The method according to claim 1, **characterized in that** the after-ripening is carried out by cooking, pasteurizing or by UHT-treatment, depending on the dry-matter content of the emulsion.

8. The method according to claim 1, **characterized in that** the emulsion obtained is, in addition, fermented with suitable lactic acid, bifido- or propionic acid bacteria, or with a mixture of these bacteria.

9. The method according to claim 8, **characterized in that** the lactic acid bacteria used are selected from *Lactobacillus acidophilus, L. rhamnosus, L. casei, L. paracasei* and *L. salivarius,* and other suitable lactobacilli.

10. The method according to claim 8, **characterized in that** the bifidobacteria used are selected from *Bifidobacterium lactis* 12, *B. longum* and *B. bifidum,* and other suitable bifidobacteria.

11. The method according to claim 8, **characterized in that** the propionic acid bacteria used are selected from *Propionibacterium freudenreichii* and other preferable propionic acid bacteria.

12. The method according to claim 1, **characterized in that** the emulsion obtained is acidified by lowering the pH by citric, malic, acetic or lactic acid.

13. The method according to any one of the claims 8 to 12, **characterized in that** the emulsion is finally pasteurized or treated with UHT.

14. The method according to any one of the claims 1 to 13, **characterized in that** the emulsion obtained is additionally dried into powder.

15. The method according to any one of the claims 1 to 14, **characterized in** using primarily oat as the cereal raw material.

16. A cereal emulsion, **characterized in that** it has been prepared according to any of one of the claims 1 to 15.

## Patentansprüche

1. Verfahren zur Herstellung einer faserreichen Getreideemulsion, **dadurch gekennzeichnet, dass**
- Getreidekleie oder Vollkorngetreideflocken mit heißem Wasser bei einer Temperatur von 50 bis 95°C für 10 bis 60 Minuten behandelt werden,
- die erhaltene Suspension zu einer cremeartigen Emulsion nass gemahlen und homogenisiert wird, und
- die erhaltene Emulsion nachgereift und gekühlt wird.

2. Verfahren nach Anspruch 1, **dadurch gekennzeichnet, dass** die Getreidekleie oder die Vollkorngetreideflocken vor der Behandlung mit heißem Wasser zu Mehl gemahlen werden.

3. Verfahren nach Anspruch 1 oder 2, **dadurch gekennzeichnet, dass** die Getreidekleie oder die Vollkorngetreideflocken vor der Behandlung mit heißem Wasser bis zu einem Trockenmassegehalt von 1 bis 35% in Wasser suspendiert werden.

4. Verfahren nach einem der Ansprüche 1 bis 3, **dadurch gekennzeichnet, dass** die Behandlung mit heißem Wasser bei einer Temperatur von 89 bis 95°C durchgeführt wird.

5. Verfahren nach einem der Ansprüche 1 bis 4, **dadurch gekennzeichnet, dass** die Homogenisierung mittels Durchpressens der Suspension durch eine Druckdüse bei einem Druck von 80 bis 250 bar und einer Temperatur von 50 bis 95°C durchgeführt wird.

6. Verfahren nach einem der Ansprüche 1 bis 4, **dadurch gekennzeichnet, dass** die Homogenisierung in zwei Phasen durchgeführt wird, derart, dass die erste Homogenisierung bei 89 bis 95°C und einem Druck von 150 bis 170 bar, und danach die zweite Homogenisierung bei 70 bis 75°C und einem Druck von 80 bis 140 bar durchgeführt wird.

7. Verfahren nach Anspruch 1, **dadurch gekennzeichnet, dass** die Nachreifung abhängig vom Trockenmassegehalt der Emulsion durch Kochen, Pasteurisieren oder Ultrahocherhitzen durchgeführt wird.

8. Verfahren nach Anspruch 1, **dadurch gekennzeichnet, dass** die erhaltene Emulsion zusätzlich mit geeigneten Milchsäure-, Bifido- oder Propionsäurebakterien oder mit einem Gemisch aus diesen Bakterien fermentiert wird.

9. Verfahren nach Anspruch 8, **dadurch gekennzeichnet, dass** die verwendeten Milchsäurebakterien ausgewählt werden aus *Lactobacillus acidophilus, L. rhamnosus, L. casei, L. paracasei* und *L. salivarius* und anderen geeigneten Lactobacilli.

10. Verfahren nach Anspruch 8, **dadurch gekennzeichnet, dass** die verwendeten Bifidobakterien ausgewählt werden aus *Bifidobacterium lactis* 12, *B. longum* und *B. bifidum* und anderen geeigneten Bifidobakterien.

11. Verfahren nach Anspruch 8, **dadurch gekennzeichnet, dass** die verwendeten Propionsäurebakterien ausgewählt werden aus *Propionibacterium freudenreichii* und anderen bevorzugten Propionsäurebakterien.

12. Verfahren nach Anspruch 1, **dadurch gekennzeichnet, dass** die erhaltene Emulsion durch Senken des pH-Wertes mittels Zitronen-, Apfel-, Essig- oder Milchsäure angesäuert wird.

13. Verfahren nach einem der Ansprüche 8 bis 12, **dadurch gekennzeichnet, dass** die Emulsion abschließend pasteurisiert oder ultrahocherhitzt wird.

14. Verfahren nach einem der Ansprüche 1 bis 13, **dadurch gekennzeichnet, dass** die erhaltene Emulsion zusätzlich zu Pulver getrocknet wird.

15. Verfahren nach einem der Ansprüche 1 bis 14, **dadurch gekennzeichnet, dass** hauptsächlich Hafer als Getreiderohstoff verwendet wird.

16. Getreideemulsion, **dadurch gekennzeichnet, dass** diese nach einem der Ansprüche 1 bis 15 hergestellt wurde.

## Revendications

1. Procédé de préparation d'une émulsion à base de céréales, riche en fibres, **caractérisé en ce que**
- le son de céréale ou les flocons à base de céréales complètes sont soumis à un traitement par l'eau chaude, à une température comprise entre 50 et 95°C pendant 10 à 60 minutes,
- la suspension obtenue est broyée par voie humide et homogénéisée de façon à former une émulsion crémeuse, et
- l'émulsion obtenue est soumise à une maturation après récolte et refroidie.

2. Procédé selon la revendication 1, **caractérisé en ce que** le son de céréale ou les flocons à base de céréales complètes sont réduits en farine préalablement au traitement par l'eau chaude.

3. Procédé selon les revendications 1 ou 2, **caractérisé en ce que** le son de céréale ou les flocons à base de céréales complètes sont mis en suspension dans de l'eau jusqu'à obtention d'une teneur en matière sèche de l'ordre de 1 à 35 %, préalablement au traitement par l'eau chaude.

4. Procédé selon l'une quelconque des revendications 1 à 3, **caractérisé en ce que** le traitement par l'eau chaude est conduit à une température comprise entre 89 et 95°C.

5. Procédé selon l'une quelconque des revendications 1 à 4, **caractérisé en ce que** l'homogénéisation est réalisée en faisant passer la suspension à travers une buse sous pression (80 à 250 bars), à une température de 50 à 95°C.

6. Procédé selon l'une quelconque des revendications 1 à 4, **caractérisé en ce que** l'homogénéisation est réalisée en deux phases, la première homogénéisation étant réalisée entre 89 et 95°C, sous une pression de 150 à 170 bars, et la seconde homogénéisation entre 70 et 75°C, sous une pression de 80 à 140 bars.

7. Procédé selon la revendication 1, **caractérisé en ce que** la maturation après récolte est réalisée par cuisson, pasteurisation ou traitement UHT, selon la teneur en matière sèche de l'émulsion.

8. Procédé selon la revendication 1, **caractérisé en ce que** l'émulsion obtenue est, en outre, fermentée au moyen de bactéries lactiques, de bifidobactéries ou de bactéries propioniques adaptées, ou encore au moyen d'un mélange desdites bactéries.

9. Procédé selon la revendication 8, **caractérisé en ce que** les bactéries lactiques utilisées sont choisies parmi *Lactobacillus acidophilus, L. rhamnosus, L. casei, L. paracasei* et *L. salivarius*, ou encore tout autre lactobacille approprié.

10. Procédé selon la revendication 8, **caractérisé en ce que** les bifidobactéries utilisées sont choisies parmi *Bifidobacterium lactis 12, B. longum* et *B*. *bifidum,* ou encore toute autre bifidobactérie appropriée.

11. Procédé selon la revendication 8, **caractérisé en ce que** les bactéries propioniques utilisées sont choisies parmi *Propionibacterium freudenreichii* ou toute autre bactérie propionique préférable.

12. Procédé selon la revendication 1, **caractérisé en ce que** l'émulsion obtenue est acidifiée en abaissant son pH au moyen d'acide citrique, malique, acétique ou lactique.

13. Procédé selon l'une quelconque des revendications 8 à 12, **caractérisé en ce que** l'émulsion est, enfin, pasteurisée ou traitée par UHT.

14. Procédé selon l'une quelconque des revendications 1 à 13, **caractérisé en ce que** l'émulsion obtenue est, de plus, déshydratée pour obtenir une poudre.

15. Procédé selon l'une quelconque des revendications 1 à 14, **caractérisé en ce que** c'est l'avoine qui est principalement utilisée comme matière première céréalière.

16. Emulsion à base de céréales, **caractérisée en ce qu'**elle a été préparée selon l'une quelconque des revendications 1 à 15.
